# EUROPEAN PATENT APPLICATION

(11) **EP 1 498 726 A1**
(43) Date of publication of application: **19.01.2005**
(21) Application number: 04254106.0
(22) Date of filing: 08.07.2004
(51) Int. Cl.: G01N 21/90, G05B 19/418, G06F 15/00

(54) **System for inspecting containers with a plurality of connected inspection machines**

(30) Priority: 18.07.2003 US 622761
(71) Applicant: Emhart Glass S.A., 6330 Cham (CH)
(72) Inventor: Furnas, William J., Elmira New York 14901 (US)
(74) Representative: Warren, Anthony Robert

(57) **Abstract**

An inspection system includes a number of inspection machines (M₁, M₂, Mₙ) arranged in a row which sequentially inspect a bottle (10) as it is conveyed through the machines. Each machine determines whether the bottle should be rejected as a result of each inspection, and passes inspection data for that bottle in an Ethernet packet via an Ethernet cable connection to the processor of the next machine. The processor (Mₙ) in the last downstream machine accordingly functions as a supervisory computer to all the machines.

## Description

The present invention relates to machines which inspect containers such as bottles for defects, and more particularly to a system which includes a number of such machines collectively evaluating a bottle.

Machines for inspecting glass bottles conduct a great variety of inspections, including an inspection for the mold cavity data so that an operator will know where a defective bottle was made, and can promptly adjust the bottle making process to eliminate the problem at that mold. Conventionally, a single machine can only handle a limited number of inspections and as a result a number of machines will sequentially receive the bottle to be inspected, and together all the required inspections will be completed.

Each machine has its own inspection system, and will determine whether any processed bottle has passed or failed each of the inspections conducted by the machine. Conventionally, a machine's data is transmitted to a supervisory computer, which receives similar data from the other machines and combines the data for subsequent use.

It is an object of the present invention to provide a system for inspecting glass containers, which is defined by a number of machines which eliminates the requirement of a supervisory computer.

According to the present invention, there is provided a multi-machine system for inspecting containers as defined in claim 1.

The present invention will now be described with reference to the accompanying drawings which illustrate a presently preferred embodiment incorporating the principles of the invention, and in which:-
Figure 1 is an elevational schematic view of a system for inspecting bottles; and
Figure 2 is a logic diagram for the processor of each of the machines shown in Figure 1.

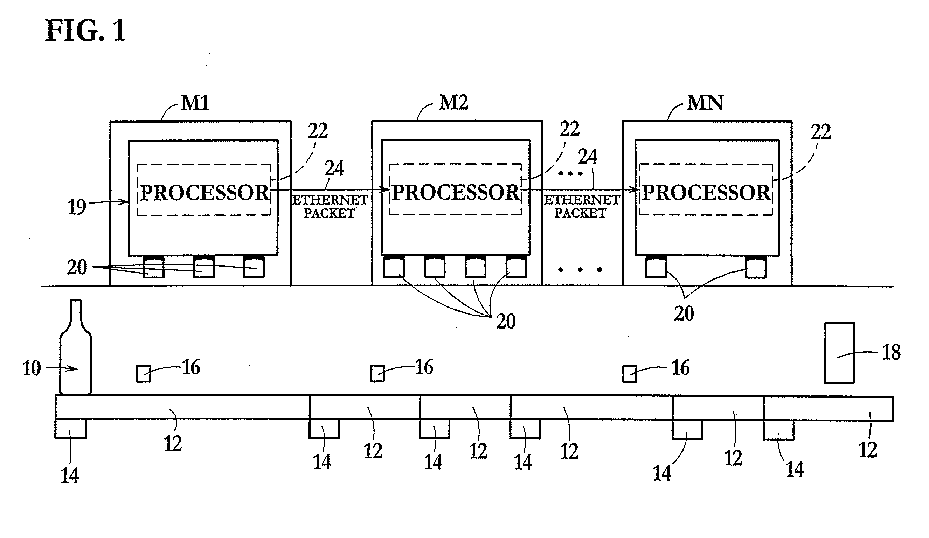

Figure 1 shows a number of inspection machines M1,M2,Mn which sequentially inspect a bottle 10. The bottle is conveyed through the machines via any number of conveyors 12 which could include belt conveyors which support the bottom of a bottle, or devices which have opposed pairs of belts which grip the side wall of a bottle, for example. An encoder 14 is associated with each conveyor so that the position of a bottle can be tracked through the machine. Also present at the entry of each machine is a part present sensor 16, and a rejector 18 is located following the discharge of a bottle from the last machine.

Each machine has an inspection system 19, which includes a number of inspection stations 20 (more than one inspection could be performed at a single station). A processor 22 in each inspection system will identify the bottle being inspected as the bottle passes the bottle present sensor, and will inspect the bottle. At the completion of the inspection processes carried out by a machine, the processor will know whether or not any of the inspections carried out by that machine indicate that the bottle should be rejected. As can be seen from Figure 1, neighboring processors are connected via an Ethernet cable 24.

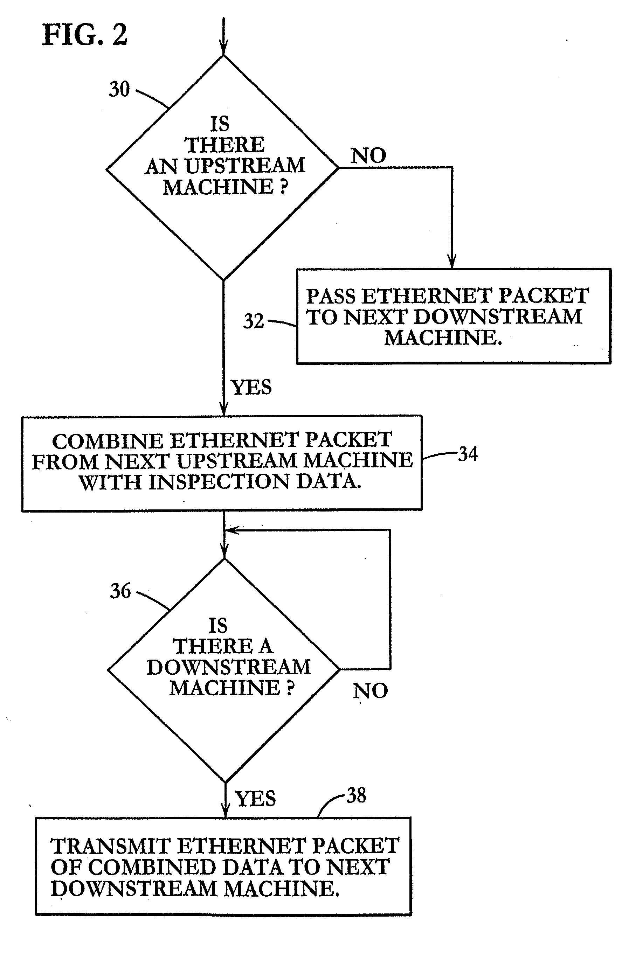

Referring to Figure 2, the query "Is there an Upstream Machine?" 30 will be answered in the negative for the processor in the most upstream location. Accordingly, this processor will form its data into an Ethernet Packet and Pass Ethernet Packet To Next Downstream Machine 32.

This query will be answered in the affirmative for any downstream processor, and a downstream processor will Combine Ethernet Packet From Next Upstream Machine With Inspection Data 34. Where the machine is a middle machine (one that has a machine on either side) the query "Is There A Downstream Machine?" 36 will be answered in the affirmative, and the processor of that machine will Transmit Ethernet Packet Of Combined Data To Next Downstream Machine 38. The combined data will be the data received via the Ethernet packet from the next upstream machine and the inspection data for the machine. The processor of the most downstream machine accordingly functions as a supervisory computer having all the data of all the inspection machines.

## Claims

1. A multi-machine system for inspecting containers comprising at least one upstream machine and a downstream most machine, wherein each machine performs at least one inspection on a container and a container is conveyed sequentially through the machines, comprising
a processor for each machine to determine whether a container is defective and should be rejected,
an Ethernet cable connection between each upstream processor and the next downstream processor,
said processors of the upstream machines each comprising means for supplying to the Ethernet cable connection between the processor and the next downstream processor, an Ethernet packet including inspection data.

2. A system according to claim 1, wherein the combined data from the machines upstream of the downstream most machine is supplied to the latter machine, whereby the processor of the latter machine functions as a supervisory computer to the upstream machines.
